# EUROPEAN PATENT APPLICATION

(11) **EP 4 693 659 A1**
(43) Date of publication of application: **11.02.2026**
(21) Application number: 24904196.3
(22) Date of filing: 06.12.2024
(51) Int. Cl.: H01M 50/244, H01M 50/595, H01M 50/291, H01M 10/6551

(54) **BATTERY PACK**

(30) Priority: 11.12.2023 KR 20230178211
(71) Applicant: LG Energy Solution Ltd., Seoul 07335 (KR)
(72) Inventor: JANG, Byung Do, Daejeon 34122 (KR); KIM, Dae Gil, Daejeon 34122 (KR); KIM, Ki Young, Daejeon 34122 (KR)
(74) Representative: Plasseraud IP
(86) International application number: PCT/KR2024/020003
(87) International publication number: WO 2025/127631

(57) **Abstract**

Embodiments provide a battery pack. The battery pack includes a base plate, first and second battery cell assemblies mounted on the base plate and including a plurality of battery cells, thermal interface material (TIM) layers between the first and second battery cell assemblies and the pack housing, and a serviceable tape between the TIM layers and the base plate.

## Description

The present application claims the benefit of priority based on Korean Patent Application No. 10-2023-0178211, filed on December 11, 2023, and the entire contents of the Korean patent application is incorporated herein by reference.

### [Technical Field]

The present invention relates to a battery pack.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### [Disclosure]

### [Technical Problem]

The present invention is directed to providing a battery pack for which after-sales services are available.

### [Technical Solution]

Embodiments of the present invention provide a battery pack. The battery pack includes a base plate, first and second battery cell assemblies mounted on the base plate and including a plurality of battery cells, thermal interface material (TIM) layers between the first and second battery cell assemblies and the base plate, and a serviceable tape between the TIM layers and the base plate.

The serviceable tape may overlap the first and second battery cell assemblies.

The serviceable tape may be removable by being pulled in a direction parallel to a mounting surface of the base plate.

The first battery cell assembly may include first and second cross-beams spaced apart from each other with the plurality of battery cells therebetween, the second battery cell assembly may include third and fourth cross-beams spaced apart from each other with the plurality of battery cells therebetween, a shape of the second cross-beam may be complementary to a shape of the third cross-beam, and the first cross-beam may include a pressure relief part.

The pressure relief part of the first cross-beam may face the base plate.

The pressure relief part may have a round shape or include a chamfer surface.

The battery pack may further include a supporting beam coupled to the base plate, the first battery cell assembly may include first and second cross-beams spaced apart from each other with the plurality of battery cells therebetween, the second battery cell assembly may include third and fourth cross-beams spaced apart from each other with the plurality of battery cells therebetween, the first cross beam may be coupled to the supporting beam, a shape of the second cross-beam may be complementary to a shape of the third cross-beam, and the supporting beam may include a pressure relief part.

The pressure relief part of the supporting beam may face the base plate.

The pressure relief part may have a round shape or include a chamfer surface.

The first and second battery cell assemblies may partially cover the serviceable tape.

The first and second battery cell assemblies may be arranged in a first direction, and the serviceable tape may protrude in the first direction with respect to the first and second battery cell assemblies.

The serviceable tape may cover the base plate.

The serviceable tape may be in contact with each of the base plate and the TIM layers.

The TIM layers may be spaced apart from the base plate.

### [Advantageous Effects]

According to embodiments of the present invention, a battery pack includes a tape between a thermal interface material (TIM) layer and a base plate. By stretching the tape, the adhesion of the TIM layer can be removed and some battery cells in which a quality issue occurs can be separated and replaced with others.

Effects achievable from embodiments of the present invention are not limited to the above-described effects, and other effects that are not described herein will be clearly derived and understood by those of ordinary skilled in the art to which the embodiments of the present invention pertain from the following description. That is, unintended effects achieved when the embodiments of the present invention are implemented are derivable by those of ordinary skilled in the art from the embodiments of the present invention.

### [Brief Description of the Drawings]

FIG. 1 is a plan view of a battery pack according to embodiments.
FIG. 2 is a cross-sectional view taken along line 1I-1I' of FIG. 1.
FIG. 3 is a diagram for describing a method according to embodiments.
FIG. 4 is a cross-sectional view for describing a method according to embodiments.
FIG. 5 is a plan view of a battery pack according to other embodiments.
FIG. 6 is a cross-sectional view taken along line 5I-5I' of FIG. 5.
FIG. 7 is a cross-sectional view taken along line 5II-5II' of FIG. 5.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

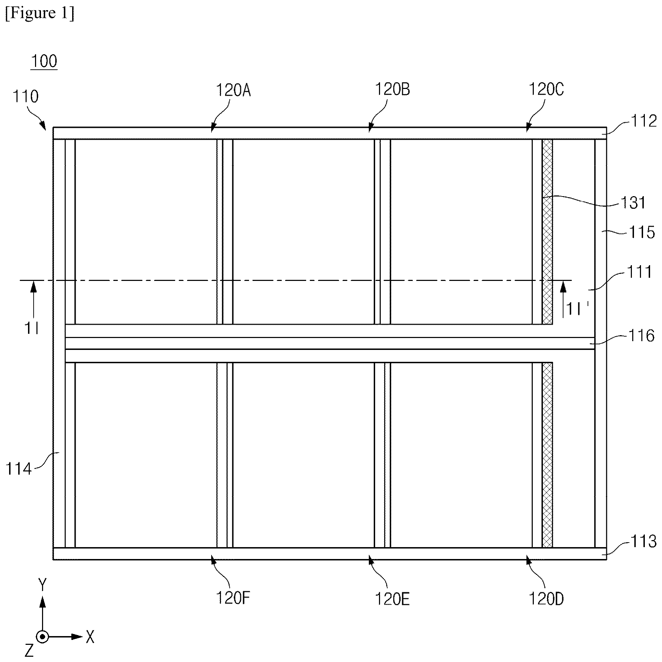

FIG. 1 is a plan view of a battery pack according to embodiments.

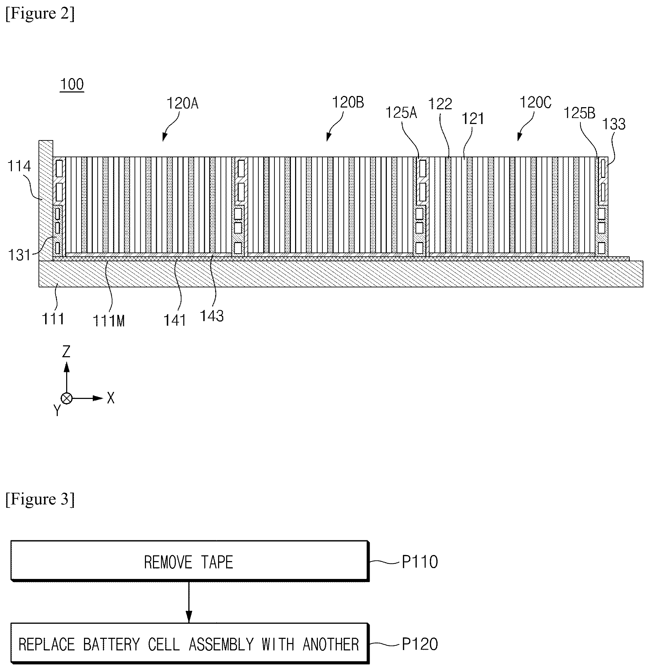

FIG. 2 is a cross-sectional view taken along line 1I-1I' of FIG. 1.

Referring to FIGS. 1 and 2, a battery pack 100 may include a pack housing 110, a plurality of battery cell assemblies 120A, 120B, 120C, 120D, 120E, and 120F, supporting beams 131 and 133, serviceable tapes 141, and thermal interface material (TIM) layers 143. The battery pack 100 may be a final product to be mounted in an application such as a vehicle.

The pack housing 110 may provide a space for mounting the battery cell assemblies 120 therein. The pack housing 110 may include a base plate 111 and side walls 112, 113, 114, and 115.

Here, two directions substantially parallel to a mounting surface 111M (i.e., a surface facing the battery cell assembly 120) of the base plate 111 are defined as an X-axis direction and a Y-axis direction, and a direction substantially perpendicular to the mounting surface 111M of the base plate 111 is defined as a Z-axis direction. The X-axis direction, the Y-axis direction, and the Z-axis direction may be substantially perpendicular to one another.

Each of the base plate 111 and the side walls 112 and 113 may be provided by an extrusion process. An extrusion direction of each of the base plate 111 and the side walls 112 and 113 may be the X-axis direction. The side walls 114 and 115 may also be provided by the extrusion process. The side walls 112, 113, 114, and 115 may be substantially perpendicular to the base plate 111.

According to embodiments, the base plate 111 and the side walls 112 and 113 may be coupled by friction stir welding. The base plate 111 may include a plurality of unit plates coupled to each other by friction stir welding.

The pack housing 110 may include a center beam 116. The center beam 116 may extend in the X-axis direction. The center beam 116 may be interposed between the side walls 112 and 113. The center beam 116 may be included in a center plate that is one of the plurality of unit plates coupled to each other by friction stir welding. Accordingly, the center beam 116 may be formed together with the center plate, and be an element integrally formed with the center plate.

The base plate 111 may include a plurality of cooling channels. The plurality of cooling channels may provide a passage for moving, for example, a refrigerant such as water. The plurality of cooling channels may be formed by the extrusion process. The plurality of cooling channels may extend in the X-axis direction. The plurality of cooling channels may be spaced apart from each other in the Y-axis direction.

The plurality of battery cell assemblies 120A, 120B, 120C, 120D, 120E and 120F may be on the base plate 111 of the pack housing 110. The base plate 111 may support the plurality of battery cell assemblies 120A, 120B, 120C, 120D, 120E and 120F. The side walls 112, 113, 114, and 115 may horizontally surround the plurality of battery cell assemblies 120A, 120B, 120C, 120D, 120E and 120F. The side walls 112, 113, 114, and 115 may protect the plurality of battery cell assemblies 120A, 120B, 120C, 120D, 120E and 120F.

Hereinafter, the technical idea of the present invention will be described based on an embodiment in which the battery pack 100 is of a moduleless type and each of the plurality of battery cell assemblies 120A, 120B, 120C, 120D, 120E, and 120F does not include a module frame, but the embodiment is only an example and does not limit the technical idea of the present invention in any sense. Those of ordinary skill in the art will be able to derive an embodiment in which a battery pack is of a module type and each of a plurality of battery cell assemblies includes a module frame, based on the above description.

The plurality of battery cell assemblies 120A, 120B, 120C, 120D, 120E and 120F may be on the base plate 111. Each of the plurality of battery cell assemblies 120A, 120B, 120C, 120D, 120E, and 120F may include a plurality of battery cells 121, pads 122, and first and second cross-beams 125A and 125B.

Each of the plurality of battery cells 121 may be a lithium ion battery. Each of the plurality of battery cells 121 includes an electrode assembly, an electrolyte, and a case. Each of the plurality of battery cells 121 may be one of a cylindrical battery cell, a prismatic battery cell, and a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween.

The plurality of battery cells 121 may form a plurality of banks. Each of the plurality of banks may include one or more battery cells 121. The one or more battery cells 121 of each of the plurality of banks may be connected with each other in parallel. The plurality of banks may be connected to each other in series. The number of banks connected in series and the number of battery cells 121 included in the plurality of banks may be determined according to a voltage and a current to be output from each of the battery cell assemblies 120.

The pads 122 may be interposed between the battery cells 121. The pads 122 may horizontally press the battery cells 121 and prevent or alleviate swelling of the battery cells 121. The pads 122 may isolate the battery cells 121 from each other. According to embodiments, each of the pads 122 may include polyurethane (PU). According to embodiments, each of the pads 122 may include a refractory material such as silicon.

According to embodiments, the plurality of pads 122 and a plurality of banks may be alternately arranged. According to embodiments, one of the plurality of banks may be interposed between neighboring pads 122, and one of the other pads 122 may be interposed between neighboring banks. According to other embodiments, two or more banks may be interposed between neighboring pads 122.

Each of the plurality of battery cell assemblies 120A, 120B, 120C, 120D, 120E, and 120F may include first and second bus bar assemblies. The first bus bar assembly and the second bus bar assembly may be spaced apart from each other in the Y-axis direction with a plurality of battery cells 121 interposed therebetween. Each of the plurality of battery cell assemblies 120A, 120B, 120C, 120D, 120E, and 120F may further include a cable configured to electrically connect the first bus bar assembly and the second bus bar assembly.

The first bus bar assembly may include a first bus bar frame, a first integrated circuit, and bus bars. The second bus bar assembly may include a second bus bar frame and a second integrated circuit.

The first and second bus bar frames may include, for example, an insulating material such as plastic. The first bus bar frame may be configured to support elements, such as bus bars and the first integrated circuit, of the first bus bar assembly. The second integrated circuit may be mounted on the second bus bar frame.

The first and second integrated circuits of the first and second bus bar assemblies 123 and 124 may be connected to sensors for sensing a voltage, current, and/or temperature inside the plurality of battery cell assemblies 120. A voltage, current, and/or temperature inside the battery cell assembly 120, which is received by the second integrated circuit, may be transmitted to the first integrated circuit through the cable. The first integrated circuit may be configured to transmit, for example, an electrical signal indicating a voltage, current, and/or temperature inside the battery cell assembly 120 to a battery management system (BMS).

The bus bars of the first bus bar assembly may be external connection terminals. The external connection terminals may be configured to output a resultant voltage (or current) according to an electrical connection of the plurality of battery cells 121.

The cross-beams 125A and 125B of each of the plurality of battery cell assemblies 120A, 120B, 120C, 120D, 120E, and 120F may be spaced apart from each other in the X-axis direction with the plurality of battery cells 121 interposed therebetween. The cross-beams 125A and 125B of each of the plurality of battery cell assemblies 120A, 120B, 120C, 120D, 120E and 120F may cover the plurality of battery cells 121. The cross-beams 125A and 125B of each of the plurality of battery cell assemblies 120A, 120B, 120C, 120D, 120E and 120F may be fixed to the plurality of battery cells 121. The cross-beams 125A and 125B of each of the plurality of battery cell assemblies 120A, 120B, 120C, 120D, 120E, and 120F may be fixed to the base plate 111 by a method such as bolting.

The cross-beams 125A and 125B of each of the plurality of battery cell assemblies 120A, 120B, 120C, 120D, 120E and 120F may include a rib defining a cavity. Accordingly, the cross-beams 125A and 125B of each of the plurality of battery cell assemblies 120A, 120B, 120C, 120D, 120E and 120F may decrease in weight, and the energy density of the battery pack 100 may be improved.

According to embodiments, the cross-beams 125A and 125B of each of the plurality of battery cell assemblies 120A, 120B, 120C, 120D, 120E and 120F may have a stepped structure. According to embodiments, shapes of the cross-beams 125A and 125B of each of the plurality of battery cell assemblies 120A, 120B, 120C, 120D, 120E and 120F may be complementary to each other. Accordingly, the cross-beams 125B of the battery cell assemblies 120A, 120B, 120D, and 120E may be coupled to the cross-beam 125A of a subsequent one of the battery cell assemblies 120B, 120C, 120E, and 120F. The complementary shapes of the cross-beams 125A and 125B may be understood as a concept including a clearance between the cross-beams 125A and 125B for an assembly margin.

The cross-beams 125A and 125B of each of the plurality of battery cell assemblies 120A, 120B, 120C, 120D, 120E, and 120F may be provided by, for example, the extrusion process but are not limited thereto.

According to embodiments, the cross-beams 125A of the battery cell assemblies 120A and 120D may be coupled to the supporting beams 131 on the base plate 111. The cross-beams 125A of the battery cell assemblies 120A and 120D may be fixed to the supporting beams 131 by bolting. According to embodiments, the supporting beams 133 may be coupled to the cross-beams 125B of the battery cell assemblies 120C and 120F. According to embodiments, the cross-beams 125B of the battery cell assemblies 120C and 120F and the supporting beams 133 may be coupled to the base plate 111 by bolting. The supporting beams 131 and 133 may be provided by the extrusion process and include a cavity.

The TIM layers 143 may be provided on the base plate 111B of the pack housing 110. The TIM layers 143 may be interposed between each of the plurality of battery cell assemblies 120A, 120B, 120C, 120D, 120E, and 120F and the base plate 111. The TIM layers 143 may include a resin composition. The TIM layers 143 may be provided by a process of applying a thermal resin.

FIG. 3 illustrates that the TIM layers 143 are not present on a central part of each of the plurality of battery cell assemblies 120A, 120B, 120C, 120D, 120E, and 120F in the Y-axis direction and two TIM layers 143 correspond to (i.e., overlap in the Z-axis direction) each of the plurality of battery cell assemblies 120A, 120B, 120C, 120D, 120E, and 120F but is only an example and does not limit the technical idea of the present invention in any sense.

The resin composition may be a composition that is curable at room temperature. That is, a curing reaction of the resin composition may start and proceed at room temperature. The curing reaction of the resin composition may be promoted at a temperature higher than room temperature. A curing reaction rate of the resin composition at a temperature higher than room temperature may be higher than a curing reaction rate of the resin composition at room temperature. As a non-limiting example, a major component of the resin composition may be a silicone resin, a polyol resin, an epoxy resin, or an acrylic resin.

A curing agent of the resin composition may be selected according to the major component of the resin composition. For example, the curing agent may be a siloxane compound when the major component of the resin composition is a silicone resin, may be an isocyanate compound when the major component of the resin composition is a polyol resin, may be an amine compound when the major component of the resin composition is an epoxy resin, and may be an isocyanate compound when the major component of the resin composition is an acrylic resin.

An inorganic filler of the resin composition may have relatively high thermal conductivity. According to embodiments, the thermal conductivity of the inorganic filler of the resin composition may be about 1 W/mK or more. According to embodiments, the thermal conductivity of the inorganic filler of the resin composition may be about 5 W/mK or more. According to embodiments, the thermal conductivity of the inorganic filler of the resin composition may be about 10 W/mK or more. According to embodiments, the thermal conductivity of the inorganic filler of the resin composition may be about 15 W/mK or more.

According to embodiments, the inorganic filler of the resin composition may include ceramic. For example, the inorganic filler of the resin composition may include aluminum oxide (Al₂O₃), aluminum nitride (AlN), boron nitride (BN), silicon nitride (Si₃N₄), silicon carbide (SiC), beryllium oxide (BeO), zinc oxide (ZnO), aluminum hydroxide (Al(OH)₃), or boehmite. The resin composition may include a carbon filler. The resin composition may include, for example, fumed silica, clay, or calcium carbonate.

The serviceable tapes 141 may be interposed between the TIM layers 143 and the base plate 111. The serviceable tapes 141 may be in contact with each of the TIM layers 143 and the base plate 111. The serviceable tapes 141 may cover the base plate 111 and thus each of the TIM layers 143 may not be in contact with the base plate 111. Each of the TIM layers 143 may be spaced apart from the base plate 111.

The plurality of battery cell assemblies 120A, 120B, 120C, 120D, 120E, and 120F may partially cover the serviceable tapes 141. The plurality of battery cell assemblies 120A, 120B, 120C, 120D, 120E, and 120F may expose portions of the serviceable tapes 141. One of the serviceable tapes 141 may protrude in the X-axis direction with respect to the battery cell assemblies 120A, 120B, and 120C. One of the serviceable tapes 141 may protrude in the X-axis direction with respect to the battery cell assemblies 120D, 120E, and 120F. The serviceable tapes 141 may include a portion between the battery cell assemblies 120C and 120D and the side wall 115.

The TIM layers 143 may partially cover the serviceable tapes 141. The TIM layers 143 may expose portions of the serviceable tapes 141. The serviceable tapes 141 may protrude in the Y-axis direction with respect to the TIM layers 143. The serviceable tapes 141 may include a portion between the TIM layer 143 and the side wall 112 or a portion between the TIM layer 143 and the side wall 113.

The center beam 116 may extend in the X-axis direction. The center beam 116 may isolate the battery cell assemblies 120A, 120B and 120C and the battery cell assemblies 120D, 120E and 120F in the Y-axis direction. The center beam 116 may be interposed between the battery cell assemblies 120A, 120B and 120C and the battery cell assemblies 120D, 120E and 120F. The battery cell assemblies 120A, 120B, and 120C may be interposed between the side wall 112 and the center beam 116. The battery cell assemblies 120D, 120E, and 120F may be interposed between the side wall 113 and the center beam 116.

An array of the plurality of battery cell assemblies 120A, 120B, 120C, 120D, 120E and 120F of FIG. 1 may be a 3*2 array. The array of the plurality of battery cell assemblies 120A, 120B, 120C, 120D, 120E, and 120F of FIG. 1 is a non-limiting example and does not limit the technical idea of the present invention in any sense. Those of ordinary skill in the art will be able to easily derive the plurality of battery cell assemblies 120A, 120B, 120C, 120D, 120E, and 120F arranged in an MxN array (here, M and N are each an integer of 2 or more), based on the above description.

The battery pack 100 may further include a lid coupled to the side walls 112, 113, 114, and 115 of the pack housing 110. The lid may cover elements, such as the plurality of battery cell assemblies 120A, 120B, 120C, 120D, 120E, and 120F and an electronic component, mounted in the battery pack 100. The lid may be fixed to the pack housing 110 by a mechanical coupling means such as bolting.

The battery pack 100 may further include exhaust devices coupled to the side walls 114 and 115. One of the side walls 114 and 115 may include exhaust holes connected to the exhaust devices. The exhaust devices may be configured to delay thermal propagation by discharging a high-temperature gas from the inside of the battery pack 100 to the outside when a thermal runaway event occurs in the plurality of battery cell assemblies 120A, 120B, 120C, 120D, 120E, and 120F.

Here, the thermal runaway event occurring in the plurality of battery cell assemblies 120A, 120B, 120C, 120D, 120E, and 120F is a state in which a temperature change of the plurality of battery cell assemblies 120A, 120B, 120C, 120D, 120E, and 120F accelerates the temperature change, and is uncontrollable positive feedback. A temperature of the plurality of battery cell assemblies 120A, 120B, 120C, 120D, 120E, and 120F that are in a thermal runaway state increases sharply, and a large amount of high-pressure gas and combustion debris are discharged therefrom.

The battery pack 100 may further include a battery management system (BMS). The BMS may be configured to monitor, balance, and control the battery pack 100. The monitoring of the battery pack 100 may include measuring voltages and currents of certain nodes inside the plurality of battery cell assemblies the plurality of battery cell assemblies 120A, 120B, 120C, 120D, 120E, and 120F and measuring temperatures at set positions inside the battery pack 100. The battery pack 100 may include measuring devices for measuring a voltage, a current, and temperature as described above.

The balancing of the battery pack 100 is an operation of reducing a deviation between the plurality of battery cell assemblies 120A, 120B, 120C, 120D, 120E, and 120F. The controlling of the battery pack 100 includes preventing overcharging, over-discharging, and overcurrent. Through monitoring, balancing, and controlling, the battery pack 100 may be operated under optimal conditions to prevent a decrease in the lifespan of each of the plurality of battery cell assemblies 120A, 120B, 120C, 120D, 120E, and 120F .

The battery pack 100 may further include additional electronic components such as a cooling device, a power relay assembly (PRA), and a safety plug. The cooling device may include a cooling fan. The cooling fan may circulate air in the battery pack 100 to prevent overheating of each of the plurality of battery cell assemblies 120A, 120B, 120C, 120D, 120E, and 120F. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120A, 120B, 120C, 120D, 120E, and 120F and the external load, when an abnormal voltage such as a voltage surge occurs. The additional electronic components may be interposed between the plurality of battery cell assemblies 120A, 120B, 120C, 120D, 120E, and 120F and the side wall 115. A space between the battery cell assemblies 120A, 120B, 120C, 120D, 120E, and 120F and the side wall 115 may be referred to as an electronic component mounting area.

The battery pack 100 may further include a plurality of bus bars configured to electrically connect the plurality of battery cell assemblies 120A, 120B, 120C, 120D, 120E and 120F. The plurality of battery cell assemblies 120A, 120B, 120C, 120D, 120E and 120F may be connected in series by the plurality of bus bars. Accordingly, the battery pack 100 may be configured to output a high voltage to an external load (e.g., a motor of a vehicle).

### (Second Embodiment)

FIG. 3 is a diagram for describing a method according to embodiments.

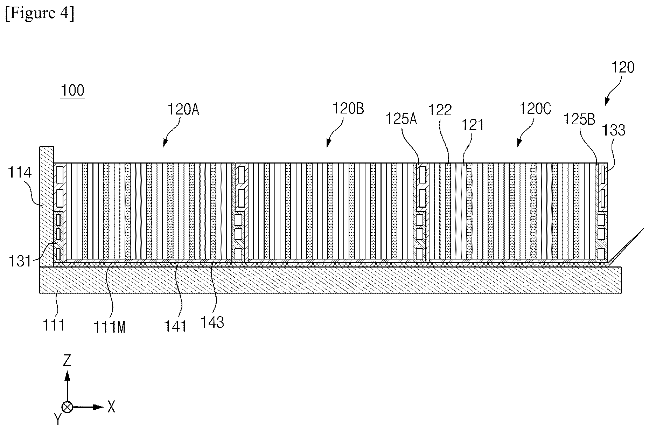

FIG. 4 is a cross-sectional view for describing a method according to embodiments.

Referring to FIGS. 3 and 4, in P120, the serviceable tape 141 may be removed. Before the serviceable tape 141 is removed, the lid may be separated from the pack housing 110. In this process, a serviceable tape 141 overlapping a problematic battery cell assembly 120 in the Z-axis direction among the serviceable tapes 141 may be removed. The serviceable tape 141 may be removed by tension. The serviceable tape 141 may have sufficient tensile strength to not be broken while the serviceable tape 141 is removed.

According to embodiments, the serviceable tapes 141 may protrude toward the electronic component mounting area in the X-axis direction with respect to the plurality of battery cell assemblies 120A, 120B, 120C, 120D, 120E, and 120F and the TIM layers 143. Because the electronic component mounting area includes an empty space, a clearance for removing the serviceable tapes 141 is not provided separately and thus the energy density of the battery pack 100 may be improved.

Because the TIM layers 143 are cured in the assembly of the battery pack 100, there may be no adhesion between the TIM layers 143 and the base plate 111 when the serviceable tape 141 is removed. Accordingly, in P130, a defective one of the plurality of battery cell assemblies 120A, 120B, 120C, 120D, 120E, and 120F may be replaced with a normal battery cell assembly.

### (Third Embodiment)

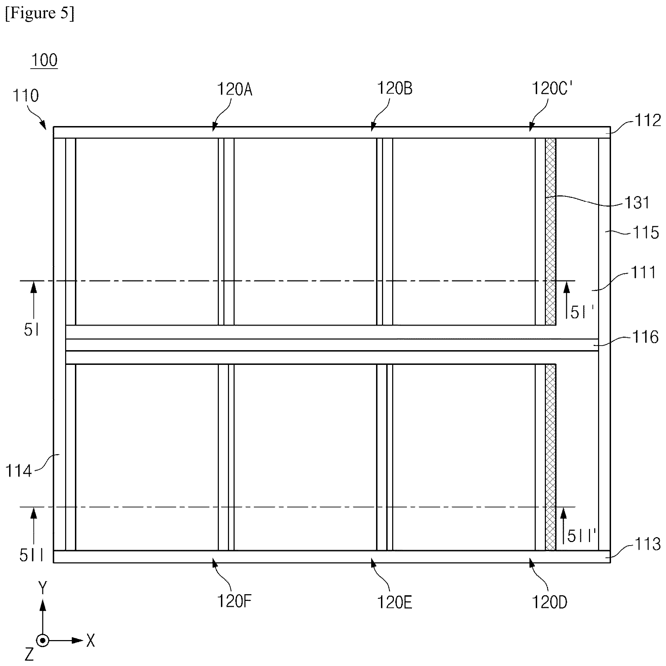

FIG. 5 is a plan view for describing a battery pack 101 according to other embodiments.

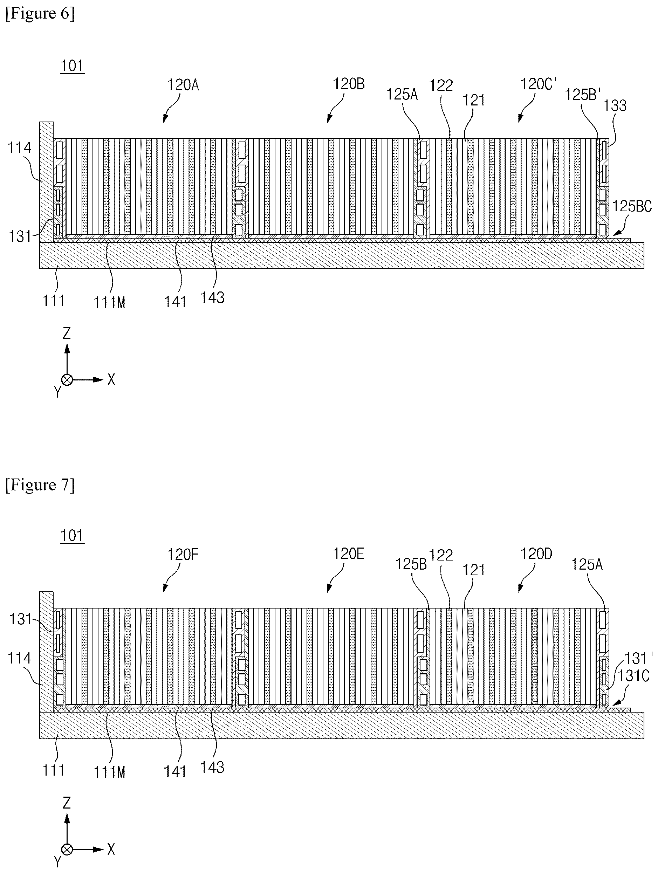

FIG. 6 is a cross-sectional view taken along line 5I-5I' of FIG. 5.

FIG. 7 is a cross-sectional view taken along line 5II-5II' of FIG. 5.

Referring to FIGS. 5 to 7, the battery pack 100 may include a pack housing 110, a plurality of battery cell assemblies 120A, 120B, 120C', 120D, 120E, and 120F, supporting beams 131, 131' and 133, serviceable tapes 141, and TIM layers 143. The battery pack 100 may be a final product to be mounted in an application such as a vehicle.

The pack housing 110, the battery cell assemblies 120A, 120B, 120D, 120E and 120F, the supporting beams 133 and 135 (see FIG. 5), the supporting beams 131 and 133, the serviceable tapes 141, and the TIM layers 143 are substantially the same as those described above with reference to FIGS. 1 to 3 and thus redundant description thereof is omitted here.

The battery cell assembly 120C' is the same as the battery cell assembly 120C of FIG. 1, except that a cross-beam 125B' includes a pressure relief part 125BC. The pressure relief part 125BC may have a round shape or include a chamfer surface. The pressure relief unit 125BC may face a base plate 111.

The supporting beam 131' is the same as the supporting beam 131 except that the supporting beam 131' includes a pressure relief part 131C. The pressure relief part 131C may have a round shape or include a chamfer surface. The pressure relief unit 131C may face the base plate 111.

According to embodiments, due to the pressure relief parts 125BC and 131C, pressure to be applied to the serviceable tapes 141 may decrease during the removing of the serviceable tapes 141, and the breakage of the serviceable tapes 141 may be prevented or alleviated.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a base plate;
first and second battery cell assemblies mounted on the base plate and including a plurality of battery cells;
thermal interface material (TIM) layers between the first and second battery cell assemblies and the base plate; and
a serviceable tape between the TIM layers and the base plate.

2. The battery pack of claim 1, wherein the serviceable tape overlaps the first and second battery cell assemblies.

3. The battery pack of claim 1, wherein the serviceable tape is removable by being pulled in a direction parallel to a mounting surface of the base plate.

4. The battery pack of claim 1, wherein the first battery cell assembly includes first and second cross-beams spaced apart from each other with the plurality of battery cells between the first and second cross-beams,
the second battery cell assembly includes third and fourth cross-beams spaced apart from each other with the plurality of battery cells between the third and fourth cross-beams,
a shape of the second cross-beam is complementary to a shape of the third cross-beam, and
the first cross-beam includes a pressure relief part.

5. The battery pack of claim 4, wherein the pressure relief part of the first cross-beam faces the base plate.

6. The battery pack of claim 4, wherein the pressure relief part has a round shape or includes a chamfer surface.

7. The battery pack of claim 1, further comprising a supporting beam coupled to the base plate, and
wherein the first battery cell assembly includes first and second cross-beams spaced apart from each other with the plurality of battery cells between the first and second cross-beams,
the second battery cell assembly includes third and fourth cross-beams spaced apart from each other with the plurality of battery cells between the third and fourth cross-beams,
the first cross beam is coupled to the supporting beam,
a shape of the second cross-beam is complementary to a shape of the third cross-beam, and
the supporting beam includes a pressure relief part.

8. The battery pack of claim 7, wherein the pressure relief part of the supporting beam faces the base plate.

9. The battery pack of claim 7, wherein the pressure relief part has a round shape or includes a chamfer surface.

10. The battery pack of claim 1, wherein the first and second battery cell assemblies partially cover the serviceable tape.

11. The battery pack of claim 1, wherein the first and second battery cell assemblies are arranged in a first direction, and
the serviceable tape protrudes in the first direction with respect to the first and second battery cell assemblies.

12. The battery pack of claim 1, wherein the serviceable tape covers the base plate.

13. The battery pack of claim 1, wherein the serviceable tape is in contact with each of the base plate and the TIM layers.

14. The battery pack of claim 1, wherein the TIM layers are spaced apart from the base plate.
